# EUROPEAN PATENT APPLICATION

(11) **EP 4 074 868 A1**
(43) Date of publication of application: **19.10.2022**
(21) Application number: 21750915.7
(22) Date of filing: 28.01.2021
(51) Int. Cl.: C25F 3/16, C09G 1/02, C09K 13/00

(54) **SOLID ELECTROLYTE FOR DRY ELECTROPOLISHING OF METALS WITH ACTIVITY MODERATOR**

(30) Priority: 04.02.2020 ES 202030082
(71) Applicant: Drylyte, S.L., 08035 Barcelona (ES)
(72) Inventor: SOTO HERNANDEZ, Marc, 08105 SANT FOST DE CAMPSENTELLES (BARCELONA) (ES); SARSANEDAS GIMPERA, Marc, 17800 OLOT (GIRONA) (ES)
(74) Representative: Espiell Gomez, Ignacio
(86) International application number: PCT/ES2021/070065
(87) International publication number: WO 2021/156531

(57) **Abstract**

Solid electrolyte for dry electropolishing of metals, that comprises: At least a type of active particles of resin of ionic exchange charged with an acid solution that generate a chemical activity and an electric activity, at least a type of moderating particles of the chemical action and/or moderating particles of the electric conductivity of the active particles, so that the moderating particles reduce the attacks localized on the surface of the polished part provoked by the exudates of the active particles.

## Description

### FIELD OF THE TECHNICS

This invention describes a solid electrolyte to be used in systems for metals dry electropolishing. For this, this invention falls on the field of metal polishes in those fields that requires high quality metal finishes such as, for example, the car, aeronautics, medicine, dental, decoration, jewelry, watchmaking sectors among several others.

### BACKGROUND OF THE INVENTION

The dry electropolishing by means of solid electrolyte is an emergent technology described for the first time in 2016 in the patent ES2604830. In this process, a metal part connected to an anode, moves within a container that contains solid electrolyte particles and a cathode. This produces an elimination of metal where the metal surface contacts the particles, that means, at the roughness peaks because there is passage of current only at the points of contact, generating a polish process with spectacular results without affecting the vortexes nor the edges.

A description of particles used for this process is detailed in the document ES2721170 (A1). These particles are formed by particles of resins of ionic exchange that retain an acid electrolyte liquid within it. These particles are very active on the metal surface. In metals that produce a protection by themselves, that means self-passivating metals, these particles produce excellent results, producing spectacular finishes The passivation layer counters the particles great activity. The polish by means of dry electropolishing of self-passivating metals such as, for example, stainless steels, cobalt-chromium alloys or titanium produce excellent results. In some self-passivating metals, when they are polished by means of dry electropolishing, a surface is achieved with an unwanted undulation pattern, similar to an "orange peel-type" surface. This result is not optimal and therefore, a new formulation of dry electrolyte is necessary that does not produce this unwanted undulation pattern.

The problem worsens when non-self-passivating metals are polished by means of dry electropolishing. The solid electrolyte particles are too aggressive for metals that do not produce, by themselves, this protection layer. When the solid electrolyte particles are used for dry electropolishing, for example, carbon steels or low alloy steels, the metal surface can sustain attacks on the surface and show "craters" corresponding to a contact with the solid electrolyte particles.

Due to the industrial importance of some of these non-self-passivating metals (for example the carbon steels, are present in tools, gears, motors, gear boxes, etc.) there exists an industrial need of a solid electrolyte capable to polish non-self-passivating metals by means of a dry electropolishing process.

According to our knowledge up to date, there exists no solid electrolyte capable to polish non-self-passivating metals by means of a dry electropolishing process without craters are generated on the surface as well as there does not either exist any solid electrolyte adapted to polish self-passivating metals that does not generate an unwanted undulation pattern. This invention provides a solid electrolyte for electropolishing metals, that overcome the said technical problems.

### EXPLANATION OF THE INVENTION

This invention describes the composition of solid electrolytes for metal dry electropolishing.

The preceding formulations of solid electrolytes are active particles of resins of ionic exchange that contain different acids. As a work novelty hypothesis, it was considered that during the electropolishing process, the solid electrolytes exude acid liquid either by pressure, by electrophoretic phenomena or others. These acid exudates on the metal surface concentrate the electric and chemical action, which generates localized attacks. The said localized attacks give rise to marks and craters harmful for a high-quality finish. According to this hypothesis, avoiding or controlling the acid exudates would result in polished surfaces without localized attacks.

The system of solid electrolyte proposed for polishing metals consists in a formulation of solid electrolytes that contain active particles of resins of ionic exchange charged with an acid solution and a portion of particles that diminish, moderate or regulate the activity of the active particles, named moderating particles.

The active particles are particles of resin of ionic exchange with capacity to retain electrolyte liquid within them. Preferably, the resin of ionic exchange is a sulfonated copolymer of styrene divinylbenzene. In another preferred formation, the resins are of acrylic gel polymer with functional groups. These polymers allow an effective exchange of the metal ions generated during the electropolishing process. Preferably, the electrolyte liquid is an acid solution. Preferably, this acid solution includes sulfuric acid and/or methane sulfonic acid. These compounds are strong acids that favor the passage of electric current and facilitate the dissolution of the oxides formed on the surface to be polished.

The active particles preferably are sphere-shaped to facilitate the movement on the surface of the part to be polished.

The active particles can be all of the same type or they can be formed by two or more types. For example, in a preferred formation the active particles are formed by two parts of particles having a size around 0.7 mm of diameter containing methane sulfonic acid and a part of particles of around 0.2 mm of diameter containing sulfuric acid. This type of combinations has the advantages of the speed of the large particles and the penetration of the small particles, as well as of combining both acids electrochemical and solubility effects.

During the electropolishing process, the active particles have two functions, a chemical action of dissolution of oxides and salts that provokes cleaning the surface to be polished; and a function of electric conductivity.

The moderating particles have the objective to limit the chemical attack action of the active particles and/or the objective to limit the electric conductivity function of the active particles. Two types of moderating particles are distinguished; the moderating particles of the chemical action of the active particles and the moderating particles of the electric conductivity of the active particles.

The moderating particles of the chemical action of the active particles have the capacity to absorb and/or to neutralize the acid exudates of the active particles.

A preferred embodiment of the moderating particles of the chemical action of the active particles are particles of acrylic gel polymer with amino functional groups initially containing water or distilled water. These particles, when contacting the surface of the metal part, absorb the possible acid rests left by the active particles, that are neutralized within the particle with the amino group. This way, the uncontrolled acid action of the acid of the acid remains is limited. Due to the gel nature, it is advisable to renew or add the moderating particles. For example, it can be started with 0.5% of the volume of moderating particles and adding more after a given time, for example, 0.5% with respect to the initial volume every 2 hours of operation to maintain the activity. These moderating particles are of preferred use for carbon steels polish.

A second preferred embodiment of the moderating particles of the chemical action of the active particle are polymers with capacity to absorb liquid that are under the saturation point, with which they have the capacity to absorb liquid, that means, partly dry particles. Preferably, they are resins of ionic exchange based on a sulfonated styrene copolymer and divinylbenzene, similar or equal to the resin of the active particles.

During the dry electropolishing process, these particles absorb the acid exudates that remain on the metal surface to be polished. When the moderating particles of the chemical action of the active particles are saturated, that means that they cannot any longer absorb more acid, a given additional percentage can be added of moderating particles of the chemical action of the active particles to maintain the moderating activity. The already saturated moderating particles do not mean a problem because they act as if they were active particles. The great advantage of these moderating particles of the chemical action of the partly dry active particles is that there is no limit of amount that can be used because virtually, after the use, they become active particles.

A third preferred embodiment of the moderating particles of the chemical action of the active particles, are particles having a basic solution inside. During the dry electropolishing process, these particles neutralize, directly on the metal surface, the acid exudates, in addition to generate basic exudates that protect the surface from further acid attacks, so they are especially useful in sensitive metals. Preferably, the basic solution contains bases that do not react with the air, are water-soluble and little volatile such as, for example, monoethanolamine, diethanolamine triethanolamine, triethylamine, buffer solutions with a base of phosphates or acetates, etc. The great advantage of this system is its effectiveness to eliminate the acid wastes from the metal surface. It is specially advised for very sensitive metal surfaces, such as low alloy steels.

The moderating particles of the electric conductivity of the active particles are non-conductor particles.

The moderating particles of the electric conductivity of the active particles limit the number of electric preferential paths that can reach the metal surface (anode) from the cathode. On the other hand, this increases the homogeneity of the more exposed parts with the more occluded parts because the possible number of electric paths is equalized. On the other hand, the presence of these moderating particles of the electric conductivity locally and momentarily breaks the electric contact of the surface which breaks the resonances that are established in the system, that cause undulations in the final orange-peel-type finish. The great advantage of the said moderating particles of the electric conductivity is the final finish they produce, with higher quality with a finish hardly with undulations.

These moderating particles of the electric conductivity can be polymer, ceramics, etc. with a density and shape such that no mass segregation of the active particles occurs.

The moderating particles of the electric conductivity can be of any non-conductor material that is acid resistant or that can resist during a given time the contact with the acid active particles during the process. The preferred materials are polymers in which the main polymeric chain contains only C-C bonds such as, for example, polymers derived from styrene, divinylbenzene, ethylene, propylene, acrylates, acrylamides, vinyl, vinyl chloride, tetrafluoroethylene, nafion, among many others. The moderating particles of the electric conductivity can be derived from silicium such as silica gel and functionalized silicas.

The shape of the moderating particles of the electric conductivity can be spheric, lenticular, prismatic, discoidal, cylindrical, irregular, etc.

The size of the moderating particles of the electric conductivity is related with the size of the active particles. As their function is to generate electric "shadows" on the metal surface to be polished, preferably the average size of the moderating particles of the electric conductivity will be equal or higher than the average size of the active particles.

In a preferred embodiment, the active particles are spheres of an average 0.7 mm size of gel of a sulfonated copolymer of polystyrene divinylbenzene containing an acid solution and the moderating particles of the electric conductivity are of vinyl polychloride PVC. This polymer has a density ranging from 1.1 to 1.4g/mL that is similar to that of the styrene copolymer and divinylbenzene of the resins which is around 1.2 to 1.3 g/mL. The fact that they have a similar density contributes to a homogeneous distribution of the different types of particles.

In another preferred embodiment, there is a third part of the volume of the PVC non-conductor irregular moderate particles and two thirds of active particles. This relation of volume o similar relations, for example, PVC non-conductor moderating particles of 20% to 45% plus active particles of 80% to 55% presents a homogenous distribution of the non-conductor particles in the active particles. The best effects are achieved when the particles are homogenously distributed or when the accumulations are solved by themselves by means of vibration and movement of the process. This is achieved with this relation of volumes that is close to two to one.

The moderating particles of the electric conductivity and/or the chemical action can have additional functions.

The moderating particles of the electric conductivity and/or the chemical action with abrasive function can be abrasive particles to have an additional function during the process. These moderating particles of the electric conductivity and/or the chemical action with abrasive function complement the electropolishing action with an effect of abrasive polish. In addition to the purely abrasive effect of the metal surface, these abrasive particles possess a novelty surface cleaning effect. During the dry electropolishing process, in given occasions, accumulations of oxide occur that can be countered by enlarging the negative pulse or avoided by changing the type of solid electrolyte. An alternative to these changes is the use of abrasive moderating particles that carry out this cleaning process and elimination of superficial oxides without the need of altering the parameters of the optimized process. The vibration of the set of particles together with the movement of the part to be polished in the system provides the sufficient kinetic energy without the necessity of adapting the dry electropolishing system. The great advantage of this type of abrasive moderating particles is their double function as regulators of the activity and as abrasive agents that cleans and polish the surface.

The moderating particles of the electric conductivity and/or chemical action with abrasive function are very hard particles. As an example, without limitation purpose, these abrasive moderating particles are salts such as aluminum oxide, calcium carbonate, silicium carbide, cubic boron nitride, boron carbide, iron oxide etc.; non-crystalline materials such as sand, granulate, crushed glass or similar; ceramic materials; minerals such as dolomite, emery, novaculite, pumice or pumice stone, sandstones, corundum, garnets, felspar, staurolite, among others.

In case that the moderating particles of electric conductivity and/or chemical action with abrasive function retain a given amount of humidity or liquid, they can consist of an abrasive paste for polishing. This type of pastes is usual to polish metals by means of an abrasive process, either manual or by means of some tool.

When treating the metal surface to be polished with the polish paste and the active particles, the paste protects the surface from an uncontrolled attack from the active particles so that the polishing process can be produced simultaneously by means of the dry electrolyte and by means of an abrasive medium. The movement and the vibration of the dry electropolishing process complement the abrasive action, at the same time that the paste used for the abrasive action protects the metal surface to be polished from a chemical or electric excessive attack of the active particles on the metal surface. The abrasive paste for polishing has the behavior of a protecting layer on the surface, Among the abrasive pastes there exists pastes having conductor properties and other that are non-conductor.

In the case of conductor abrasive pastes, the action they carry out is the chemical protection, in the case of non-conductor abrasive pastes, the action they carry out is of chemical moderation and electrical moderation. The great advantage of the use of the abrasive paste to polish as moderating, is the possibility to simultaneously or consecutively use a polish abrasive process. The synergic action of the two processes significantly reduces the operation times but producing high quality finishes.

The solid electrolyte for the metal dry electropolishing can contain one or several types of active particles and one or several types of moderating particles.

In a first preferred embodiment, the composition in volume of the electrolyte for the metal dry electropolishing is ranging as follows:
- From 0 to 99.9% of active particles with a size of around 0.7 mm of diameter containing methane sulfonic acid
- From 0 to 99.9% of active particles with a size of around 0.2 mm of diameter containing sulfuric acid. The total volume of active particles being more or equal to 50%
- From 0 to 50% of non-conductor moderating particles of electric conductivity
- From 0 to 10% initial of moderating particles of the chemical action of gel polymer containing water.

The particles that contain methane sulfonic acid have a high chemical activity for dissolving basic oxides. The particles that contain sulfuric acid, a diprotic strong acid, possess a high electric conductivity. In addition, the combination of particles of different sizes increases the points of contact between the particles as well as between the particles and the surface. To counter the high activity of the set of active particles this formulation counts on moderating particles of electric conductivity that locally and momentarily block the electric activity, given time in order that the chemical action and cleaning occur. The moderating particles of the chemical action of gel polymer containing water carry out the cleaning of the active particles exudates of the surface. It is a formulation advisable for sensitive metal parts such as for example steels for tools, carbon steels, with shapes including hollows and recesses.

In a second preferred embodiment, the composition in volume of the electrolyte for the metal dry electrolyte electropolishing is ranging as follows:
- 90 to 99.9% of active particles that contain at least an acid
- 0.1 to 10% of gel polymer moderating particles containing water.

This formulation serves to control the acid exudates produced by the active particles. It is a formulation that maintains a high electric activity, almost comparable of having only active particles, but with the advantage of avoiding exudate accumulations on the metal surface. This formulation is advisable for sensitive material parts, such as steel for tools or carbon steels. The high activity makes it suitable for large series.

In a third preferred embodiment, the composition in volume of the electrolyte for the metal dry electrolyte electropolishing is ranging as follows:
- 10 to 80% of active particles with a size around 0.7 mm of diameter containing methane sulfonic acid and/or sulfuric acid.
- 10 to 40% of active particles with a size of around 0.2 mm of diameter containing methane sulfonic acid and/or sulfuric acid. The total of the active particles being higher than or equal to 50%.
- 5 to 50% of non-conductor moderating particles.

This formulation is especially useful for the dry electropolishing to obtain high quality finishes at quick speeds in metals that possess capacity for self-passivating. With metals such as stainless steel and titanium, spectacular results are obtained without undulations that could be seen with ten magnifications.

In a fourth preferred embodiment, the initial composition in volume of the electrolyte for metal dry electropolishing is ranging as follows:
- 90 to 99.9% of active particles that contain at least one acid.
- 0.1 to 10% of partly dry particles

This formulation allows to eliminate the exudates of the active particles. The great advantage is that, once the partly dry particles are saturated, it is possible to add an amount, for example 0.5% with respect to the initial volume, of new partly dry particles, with which the absorption activity can be maintained along the time.

### PREFERRED EMBODIMENT OF THE INVENTION

### Solid electrolyte with acrylic moderating particles with water.

This formulation is designed to polish carbon steels without craters nor marks are produced on the surface.
- 9.950 kg of active particles formed by a resin of ionic exchange of very crisscrossed copolymer of styrene and divinylbenzene (to limit the exudations) Purolite Supergel SGC 650 H containing a solution of 5% of methane sulfonic acid in water
- 0.050 kg moderating particles of resin of ionic exchange of acrylic polymer with amino functional groups containing distilled water.

This electrolyte is used to polish carbon steels applying positive direct current to the part of 12V during 0.5 s and pauses of 0.5 s, adding each hour of use 0.050 kg of additional acrylic moderating particles with water.

### Solid electrolyte with non-conductor moderating particles

This formulation is designed to polish stainless steels and to obtain final results without orange peel-type undulations.
- 6.650 kg of active particles formed by spheres of resin of ionic exchange of copolymer of styrene and divinylbenzene Mitsubishi Relite CFS with an average size close to 0.7 mm containing a solution of 10% of sulfuric acid in water.
- 3.350 kg of non-conductor moderating particles formed by irregular plasticized PVC.

This electrolyte is used to polish stainless steel applying electric pulses to the part of + 17 V.20 ms; 0 V, 10 ms; - 17V, 30 ms; 0 V, 10 ms, to obtain a surface virtually free of undulations that could be seen at 10 magnifications.

### Solid electrolyte with non-conductor moderating particles

This formulation is designed to polish stainless steels and to obtain final results without orange peel-type undulations.
- 5.000 kg of active particles formed by spheres resin of ionic exchange of copolymer of styrene and divinylbenzene Mitsubishi Relite CFS with an average size close to 0.7 mm containing a solution of 5% of methane sulfonic acid in water.
- 1.150 kg of active particles formed by spheres of resin of ionic exchange of copolymer of styrene and divinylbenzene Purolite PCR 45K with an average size close to 0.2 mm containing a solution of 10% of sulfuric acid in water
- 3.350 kg of non-conductor moderating particles formed by irregular plasticized PVC.

This electrolyte is used to polish stainless steels applying electric pulses to the part + 17 V.20 ms; 0 V, 10 ms; -17 V, 30 ms; 0 V, 10 ms, to obtain a surface virtually free of undulations that could be seen at 10 magnifications.

## Claims

1. Solid electrolyte for dry electropolishing of metals, **characterized in that** it comprises:
• At least a type of active particles of resin of ionic exchange charged with an acid solution that generate a chemical activity and an electric activity.
• At least a type of moderating particles of the chemical action capable to absorb and chemically neutralize the acid exudates of the active particles and/or moderating particles of the electric conductivity of the active particles.
so that the moderating particles reduce the attacks localized on the surface of the polished part provoked by the exudates of the active particles.

2. Solid electrolyte for dry electropolishing of metals, according to the claim 1 **characterized in that** the moderating particles are particles of acrylic gel polymer with amino functional groups containing initially water or distilled water, that neutralize the acid exudates that it absorbs within the particle with the amino groups.

3. Solid electrolyte for dry electropolishing of metals, according to the claim 1 **characterized in that** the moderating particles are particles that retain a basic solution, that neutralize the acid exudates that contacts the external part of the particle with the basic solution of the moderating particles.

4. Solid electrolyte for dry electropolishing of metals, according to any of the preceding claims **characterized in that** at least a type of moderating particles are non-conductor particles.

5. Solid electrolyte for dry electropolishing of metals, according to the claim 4 **characterized in that** the average size of the moderating particles is equal or higher than the average size of the active particles

6. Solid electrolyte for dry electropolishing of metals, according to any of the preceding claims **characterized in that** the moderating particles of the chemical action and/or the moderating particles of the electric conductivity are abrasive particles that can carry out a surface cleaning process.

7. Solid electrolyte for dry electropolishing of metals, according to the claim 6 **characterized in that** the abrasive particles are particles of minerals, salts, ceramic materials or non-crystalline materials

8. Solid electrolyte for dry electropolishing of metals, according to the claim 6 **characterized in that** the abrasive particles are an abrasive paste to polish that contacts the metal surface.

9. Solid electrolyte for dry electropolishing of metals, according to any of the claims 4-5 **characterized in that** the moderating particles are of polymer in which the main chain contains only C-C bonds.

10. Solid electrolyte for dry electropolishing of metals, according to the claim 1 **characterized in that** the composition in volume is ranging as follows:
- From 0 to 99.9% of active particles with a size of around 0.7 mm of diameter containing methane sulfonic acid
- From 0 to 99.9% of active particles with a size of around 0.2 mm of diameter containing sulfuric acid.
- From 0 to 50% of non-conductor moderating particles
- From 0 to 10% moderating particles of gel polymer containing water.

11. Solid electrolyte for dry electropolishing of metals, according to the claim 1 **characterized in that** the composition in volume is ranging as follows:
- 90 to 99.9% of active particles that contain at least an acid
- 0.1 to 10% of gel polymer moderating particles containing water.

12. Solid electrolyte for dry electropolishing of metals, according to the claim 1 **characterized in that** the composition in volume is ranging as follows:
- 10 to 80% of active particles with a size around 0.7 mm of diameter containing methane sulfonic acid and/or sulfuric acid.
- 10 to 40% of active particles with a size of around 0.2 mm of diameter containing methane sulfonic acid and/or sulfuric acid. The total of the active particles being higher than or equal to 50%.
- 5 to 50% of non-conductor moderating particles.

13. Solid electrolyte for dry electropolishing of metals, according to the claim 1 **characterized in that** the composition in volume is ranging as follows:
- 90 to 99.9% of active particles that contain at least an acid
- 0.1 to 10% of partly dry particles.
